# EUROPEAN PATENT SPECIFICATION

(11) **EP 1 981 785 B1**
(45) Date of publication and mention of the grant of the patent: **30.12.2015**
(21) Application number: 07710426.3
(22) Date of filing: 31.01.2007
(51) Int. Cl.: B65G 15/40, B65G 23/00, B65G 15/62, B65G 15/42, B65G 15/08

(54) **CONVEYOR WITH TROUGHED LOW FRICTION, POSITIVE DRIVE BELT**
FÖRDEREINRICHTUNG MIT REIBUNGSARMEM MULDENBAND MIT FORMSCHLÜSSIGEM ANTRIEB
TRANSPORTEUR AVEC COURROIE DENTEE EN AUGE A FAIBLE FROTTEMENT

(30) Priority: 31.01.2006 US 275834
(43) Date of publication of application: 22.10.2008
(73) Proprietor: ThermoDrive LLC, Grand Rapids, MI 49544 (US)
(72) Inventor: HONEYCUTT, James, Grandville, Michigan 49418 (US); HATFIELD, Allen, Grand Rapids, Michigan 49507 (US)
(74) Representative: Schaumburg und Partner Patentanwälte mbB
(86) International application number: PCT/US2007/061379
(87) International publication number: WO 2007/090154

(56) References cited:
- EP-A1- 0 377 884
- EP-A1- 1 533 255
- EP-A2- 0 499 455
- DE-A1- 2 854 583
- FR-A- 650 935
- FR-A1- 2 693 441
- JP-A- 01 087 416
- JP-A- 01 117 111
- JP-U- H0 738 021
- US-A- 2 909 271
- US-A- 4 072 062
- US-A- 4 703 846
- US-A- 4 898 272
- US-A- 5 320 214
- US-A- 5 911 307
- US-A1- 2003 155 211
- US-A1- 2005 109 588

## Description

### BACKGROUND OF THE INVENTION

### Field of the Invention

The invention relates to conveyors with endless belts and, more particularly, to conveyors with low friction, positive drive belts capable of forming a trough to retain conveyed items on the belt.

### Description of the Related Art

Conveyors with friction-driven flat belts are known systems for moving items from one location to another. A tensioned, endless belt extends between a drive pulley and a tail piece (typically a pulley or a fixed bar), whereby friction between the drive pulley and the belt enables transfer of torque from the former to the latter to thereby induce movement of the belt. For example, EP 0 377 884 discloses a high speed conveyor according to the preamble of claim 1, where an unprofiled region at the underside of the belt engages a flat portion of take up rollers, and profiled edge areas positively engage edge areas of the take up rollers to keep the tensioned belt running true and in accurate position. Because tension on the belt is required to maintain the requisite friction for moving the belt, this type of conveyor does not perform well in environments where the tension and friction can be compromised. For example, in the food industry, introduction of grease and effluents from food products can result in a loss of friction and thereby detrimentally affect the performance of the conveyor.

Another type of conveyor comprises a direct or positive drive modular belt. In this type of conveyor, a modular belt formed of a plurality of interlocking links extends between a drive pulley and an idler pulley and comprises a plurality of teeth that engage corresponding sheaves on the drive pulley. Interaction between the teeth and sheaves transfers torque to the belt. As a result, the conveyor does not rely on friction for moving the belt, and the liquids associated with food handling do not affect performance in the manner described above for friction-driven belts. However, other problems arise when using low tension, direct drive modular belts in the food industry, most notably related to hygiene and cleanliness. For example, fluids and debris can become lodged in the.joints of the interconnecting links, and are difficult to sanitarily remove.

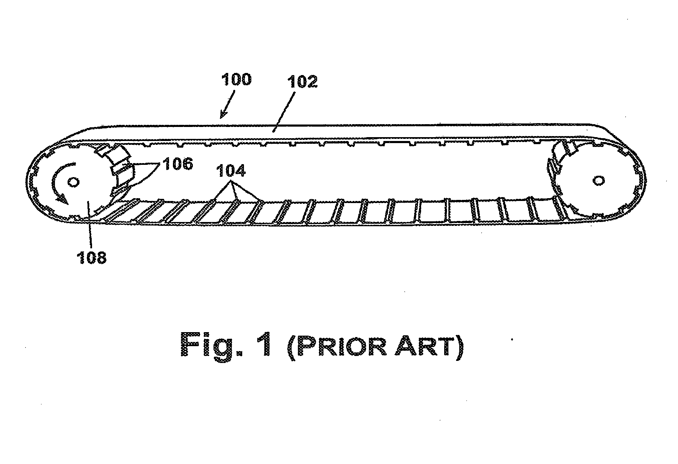

Conveyors with a low friction, positive drive belt 100 having a flat surface 102 on one side and teeth 104 on the other side, as illustrated in Fig.1, overcome the problems associated with the friction-driven flat belts and the modular belts. The seamless flat surface 102 is easy to clean, while the teeth 104 engage sheaves 106 on a drive sprocket 108 to transfer torque to the belt 100 without requiring friction between the belt 100 and the drive sprocket 108 or tension in the belt 100. Such a conveyor is disclosed in U.S. Patent Application No. 60/593,493, which is incorporated herein by reference in its entirety.

In the food handling industry, one problem associated with conveyors is retaining the conveyed item on the belt. Some items tend to migrate to the edges of the belt and, if not restrained, can fall off the belt. For conveyors with modular belts, one solution has been to provide side rails, but the items can become caught between the belt and the side rails. Alternatively, friction-driven belts can automatically form a trough when under sufficient tension, and the items naturally reside in the trough. Troughs are effective for alleviating the migration problem, but they do not automatically form in low friction, untensioned, positive drive belts.

### SUMMARY OF THE INVENTION

A conveyor includes a toothed belt of a thermoplastic material having a substantially flat surface on one side of the belt and a plurality of teeth on the other side of the belt, a drive sprocket having grooves, and an idler (16). The teeth of the belt engage the grooves of the drive sprocket. An upper span extends between the drive sprocket and the idler so that the belt can be driven with little or no tension and with minimal friction around the drive sprocket and the idler. Each tooth has at least one slit at the same distance between the edges of the belt as the adjacent teeth so that the slits are longitudinally aligned whereby a force acting on the belt will cause the flat surface to be formed into a longitudinal trough at the upper span.

The tooth can comprise only one slit. More than one slit can be provided to form a compound trough having a flat bottom. The slit can extend through the whole tooth, or less than or more than the whole tooth.

According to another embodiment, the conveyer further comprises edge guides that that contact the belt to urge the edges to exert the force acting on the belt.

According to another embodiment, the belt further comprises cleats on the flat surface.

According to another embodiment, the edge guides are disposed at the edges of the belt to urge the edges to displace relative to the center of the belt to form the longitudinal trough, comprise a pair of bars that are mounted beneath the edges and exert an upward force on the edges, comprise rollers that are mounted beneath the edges and exert an upward force on the edges, or comprise shoes arranged in pairs to receive the edges of the belt, wherein the pairs of shoes exert an inward force on the edges.

### BRIEF DESCRIPTION OF THE DRAWINGS

In the drawings:
Fig. 1 is a perspective view of a prior art conveyor comprising a low tension, positive drive belt installed between two sprockets.
Fig.2 is a perspective view of an embodiment of a conveyor comprising a low tension, positive drive belt having a gap in each tooth to form a trough in the belt, which is not part of the invention.
Fig.3 is a sectional view taken along line 3-3 of Fig.2.
Fig. 3a is the sectional view of Fig. 3 with the addition of edge guides.
Fig. 3b is a sectional view similar to the embodiment of Fig. 3, but with a modification showing two gaps.
Fig. 3c is a sectional view similar to the embodiment of Fig. 3, but with a modification showing a deeper gap.
Fig. 4 is a perspective view of a conveyor according to the invention comprising a low tension, positive drive belt having a slit in each tooth to form a trough in the belt.
Fig. 5 is a sectional view taken along line 5-5 of Fig. 4.
Fig. 5a is the sectional view of Fig. 5 with the addition of edge guides.
Fig. 5b is a sectional view similar to the embodiment of Fig. 5, but with a modification showing two slits.
Fig. 5c is a sectional view similar to the embodiment of Fig. 5, but with a modification showing a deeper slit.
Fig. 6 is a perspective view of a conveyor according to an embodiment comprising a low tension, positive drive belt having gaps between the ends of the teeth and the edges of the belt to form a trough in the belt, which is not part of the invention.
Fig. 7 is a sectional view taken along line 7-7 of Fig. 6.
Fig. 7a is the sectional view of Fig. 7 with the addition of edge guides.
Fig. 8 is a perspective view of a conveyor according to an embodiment comprising a low tension, positive drive belt and guides in the form of bars that exert an upward force on the edges of the belt to form a trough in the belt, which is not part of the invention.
Fig. 9 is sectional view taken along line 9-9 of Fig. 8.
Fig. 10 is a perspective view of a conveyor according to an embodiment comprising a low tension, positive drive belt and guides in the form of rollers that exert an upward force on the edges of the belt to form a trough in the belt, which is not part of the invention.
Fig. 11 is a sectional view taken along line 11-11 of Fig. 10.
Fig. 12 is a perspective view of a conveyor according to an embodiment comprising a low tension, positive drive belt and guides in the form of shoes that exert an inward force on the edges of the belt to form a trough in the belt, which is not part of the invention.
Fig. 13 is a sectional view taken along line 13-13 of Fig. 12.
Fig. 14 is a perspective view of the conveyor from Fig. 2 with the addition of cleats on the belt.

### DETAILED DESCRIPTION

The invention alleviates the problems of the prior art by providing a conveyor with a low friction, positive drive belt and means, which can comprise part of the belt or some other part of the conveyor, for causing the belt to form a trough to retain conveyed items on the belt. The trough forms without requiring tension in the belt and provides a channel that tends to hold the conveyed items and tends to prevent the items from migrating to edges of the belt. Descriptions of several exemplary embodiments of the conveyor with a troughed, low friction, positive drive belt follow.

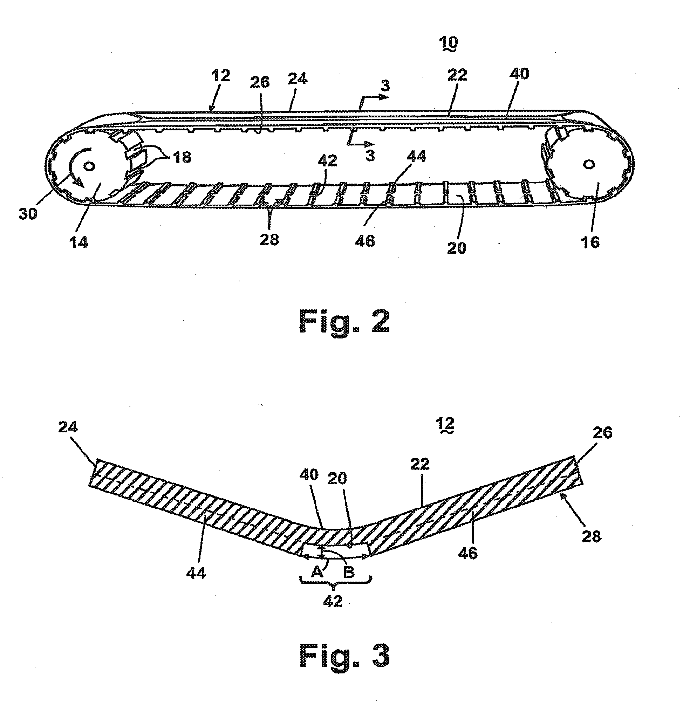

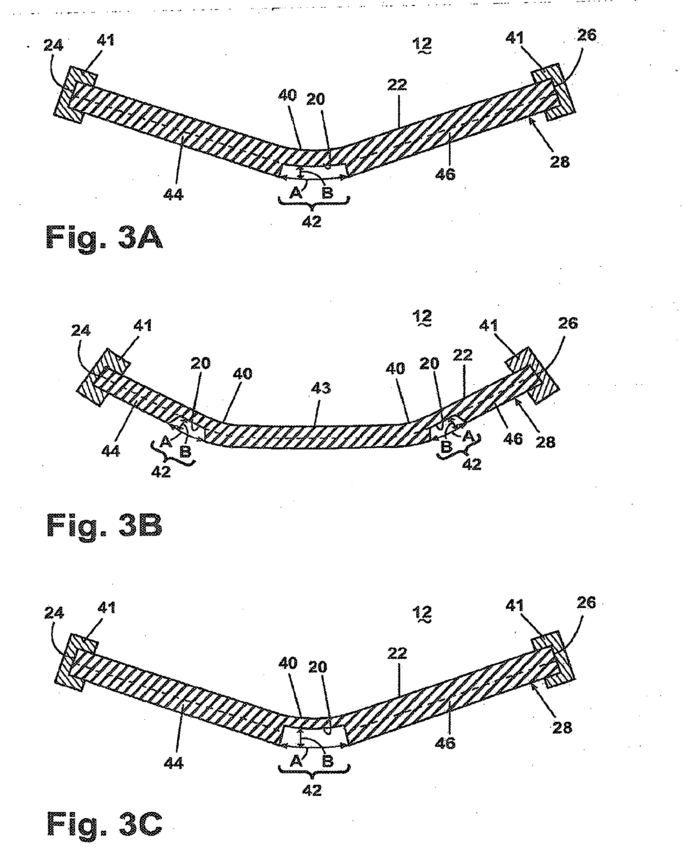

Referring now to the figures, Figs. 2 and 3 illustrate a first embodiment of a conveyor 10 comprising an endless belt 12. Fig. 2 shows the belt 12 in a typical installation between two sprockets 14, 16. At least one sprocket, e.g. sprocket 14, is a drive sprocket; the other sprocket 16 is preferably an idler or a slave sprocket, or even a fixed bar. The drive sprocket 14 is conventional and can be any of a number of different forms and sizes. The drive sprocket 14 has a number of transverse grooves or sheaves 18 spaced around its circumference. The belt 12, which is typically made of a thermoplastic material such as Pebax^{®} resin, polyester, or polyurethane, comprises an inside surface 20 and an outside surface 22 joined at side edges 24, 26. The outside surface 22 is fairly smooth and free of discontinuities. The belt 12 further comprises a plurality of teeth 28 spaced from each other on the inside surface 20 of the belt 12. The teeth 28 engage the sheaves 18 of each sprocket 14, 16 as the belt 12 wraps around the sprocket 14, 16. In this configuration, the upper span of the belt 12 will carry loads as the belt 12 travels in the direction of arrow 30.

The sprockets 14, 16 and the belt 12 are designed to permit minimal friction between them. The toothed inside surface 20 of the belt 12 can be coated with a friction reducing material, e.g. polytetrafluoroethylene (PTFE), also known as Teflon^{®}. The sprockets 14, 16 preferably have minimal surfaces contacting the belt 12 anywhere but at the teeth 28. For example, the supporting structure between adjacent sheaves 18 can be recessed from the perimeter of the sprocket 14, 16. It can also have a narrower neck to reduce surface contact with the belt 12. Further description of an exemplary low friction, positive drive belt is provided in the aforementioned and incorporated U.S. Patent Application No. 60/593,493.

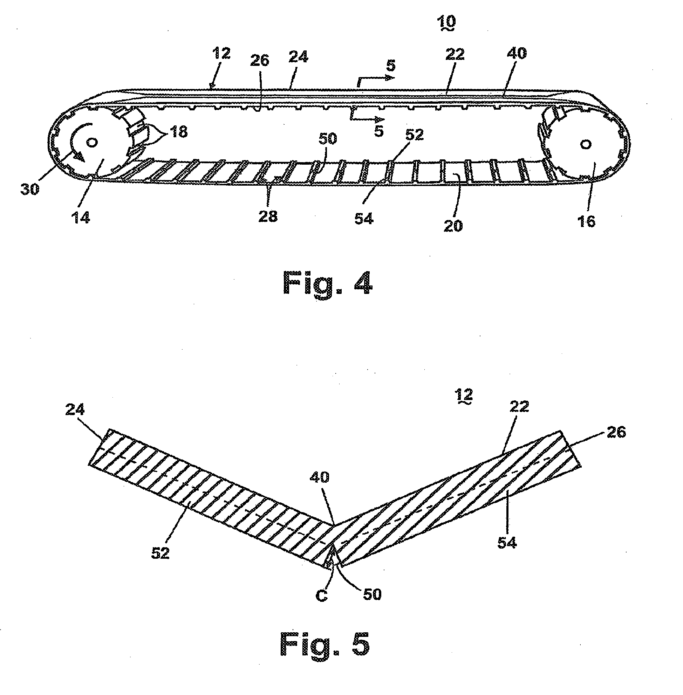

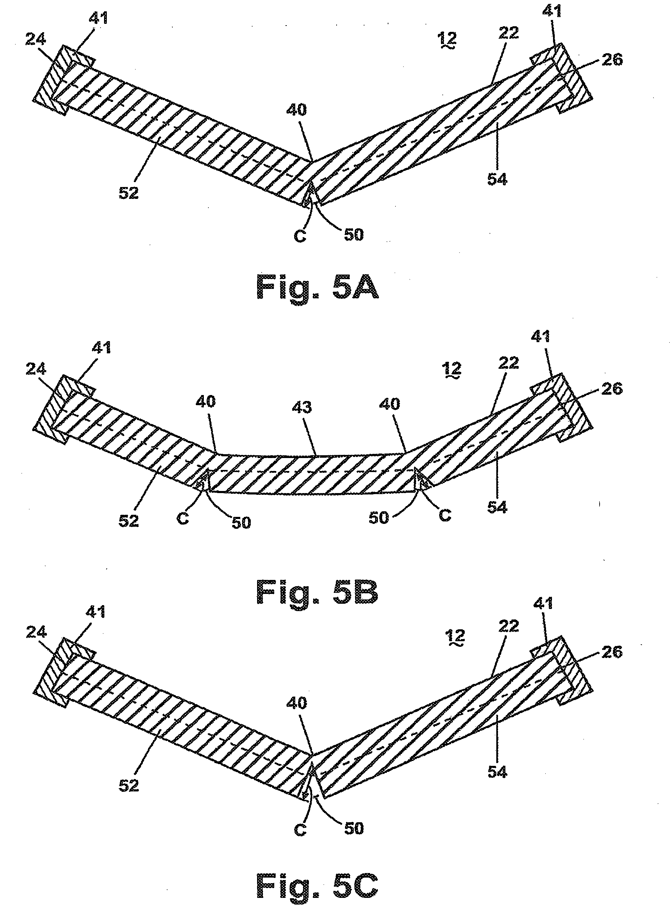

The belt 12 further comprises means that enable the belt 12 to form a longitudinal trough 40 to facilitate retaining conveyed items on the outer surface 22 of the belt 12. The embodiment of Figs. 2 and 3 shows the means as a gap 42 formed in the teeth 28. As best viewed in Fig. 3, the gap 42 divides each of the teeth 28 into a first tooth portion 44 spaced from a second tooth portion 46 a distance A equal to the width of the gap 42. Thus, the first tooth portion 44 extends from the side edge 24 to the gap 42, and the second tooth portion 46 extends from the other side edge 26 to the gap 42. In Fig. 3 and in other similar figures (i.e., Figs. 5, 7, 9, 11, and 13) a dotted line indicates an approximate juncture between the base of a tooth 28 and the inside surface 20 of the belt 12. This dotted line is provided for explanatory purposes only and does not necessarily represent a structural feature. According to the illustrated embodiment, the gap 42 is formed in each of the teeth 28 at the same distance between the edges 24, 26 of the belt 12; thus, the gaps 42 in the teeth 28 are longitudinally aligned. As a result of the gaps 42 and the longitudinal alignment thereof, the belt 12 can naturally bend at the gaps 42. Such bending will likely occur at the upper span when a force urges the middle of the belt to deflect, such as a transported object on the belt or even the weight of the belt itself As well, the side edges 24, 26 can deflect relative to the rest of the belt 12 to form the trough 40.

Geometrical characteristics of the gap 42, such as the distance A between the first and second tooth portions 44, 46 and an extent B representing the depth to which the gap 42 extends through each of the teeth 28, determine, at least in part, the depth of the \ trough 40. In Fig. 3, the gap 42 is shown as extending through the whole tooth 28, although the gap 42 can extend only part way through the tooth. Edge guides 41 can be provided at the edges 24, 26 to hold the trough 40 in a preferred configuration as shown in Fig. 3 a. Here, the edge guides 41 preferably do not impart a lateral force to the belt.

Additionally, the number of the gaps 42 in each of the teeth 28 affects the shape of the trough 40, and, although only one gap 42 is shown in each of the teeth 28 in the illustrated embodiment, each of the teeth 28 can include multiple gaps 42 and thereby more than two tooth portions in order to achieve a desired trough shape. See, for example, Fig. 3b showing two gaps 42, spaced from each other, to form a trough with a flat bottom 43. Furthermore, in the illustrated embodiment, the gaps 42 are centrally located in each of the teeth 28 to position a lowermost point of the trough 40 approximately halfway between the side edges 24, 26, but it is within the scope of the invention to locate the gaps 42 other than centrally between the side edges 24, 26 to offset the trough. Moreover, the extent B can extend past the tooth into the base of the belt itself. See, for example, the embodiment in Fig. 3c.

The embodiment of the conveyor 10 according to the invention is illustrated in Figs. 4 and 5, where components and features similar to those of the previous embodiment are identified with the same reference numeral. The embodiment conveyor 10 is substantially identical to the previous embodiment, except that a structure enabling forming a trough 40 comprises a slit 50 formed in the teeth 28. The slit 50 differs from the gap 42 in that the slit 50 does not form an appreciable space between portions of the tooth 28. Rather, the slit 50 can be viewed as a cleft in the tooth 28 that separates the tooth 28 into portions without removing material from the tooth 28.

As best viewed in Fig. 5, the slit 50 divides each of the teeth 28 into a first tooth portion 52 and a second tooth portion 54. Thus, the first tooth portion 52 extends from the side edge 24 to the slit 50, and the second tooth portion 54 extends from the other side edge 26 to the slit 50. According to the illustrated embodiment and similar to the first embodiment, the slit 50 is formed in each of the teeth 28 at the same distance between the edges 24,26 of the belt 12; thus, the slits 50 in the teeth 28 are longitudinally aligned. As a result of the slits 50 and the longitudinal alignment thereof, the belt 12 can naturally bend at the slits 50, whereby the side edges 24, 26 deflect relative to the rest of the belt 12 to form the trough 40. An extent C to which the slit 50 extends through each of the teeth 28 determines, at least in part, the depth of the trough 40. In Fig. 5, the slit 50 is shown as extending through the whole tooth 28, although it is within the scope of the invention for the slit 50 to extend only part way through the tooth. Edge guides 41 can be provided at the edges 24, 26 to hold the trough 40 in a preferred configuration as shown in Fig. 5a. Here, the edge guides 41 preferably do not impart a lateral force to the belt.

Additionally, the number of the slits 50 in each of the teeth 28 affects the shape of the trough 40, and, although only one of the slits 50 is shown in each of the teeth 28 in the illustrated embodiment, it is within the scope of the invention for each of the teeth 28 to include multiple slits 50 in order to achieve a desired trough shape. See, for example, Fig. 5b showing two slits 50, spaced from each other, to form a trough with a flat bottom 43. Furthermore, in the illustrated embodiment, the slits 50 are centrally located in each of the teeth 28 to position a lowermost point of the trough 40 approximately halfway between the side edges 24, 26, but it is within the scope of the invention to locate the slits 50 other than centrally between the side edges 24, 26 to offset the trough. Moreover, it is within the scope of the invention for the extent C to extend past the tooth into the base of the belt itself. See, for example, the embodiment in Fig. 5c.

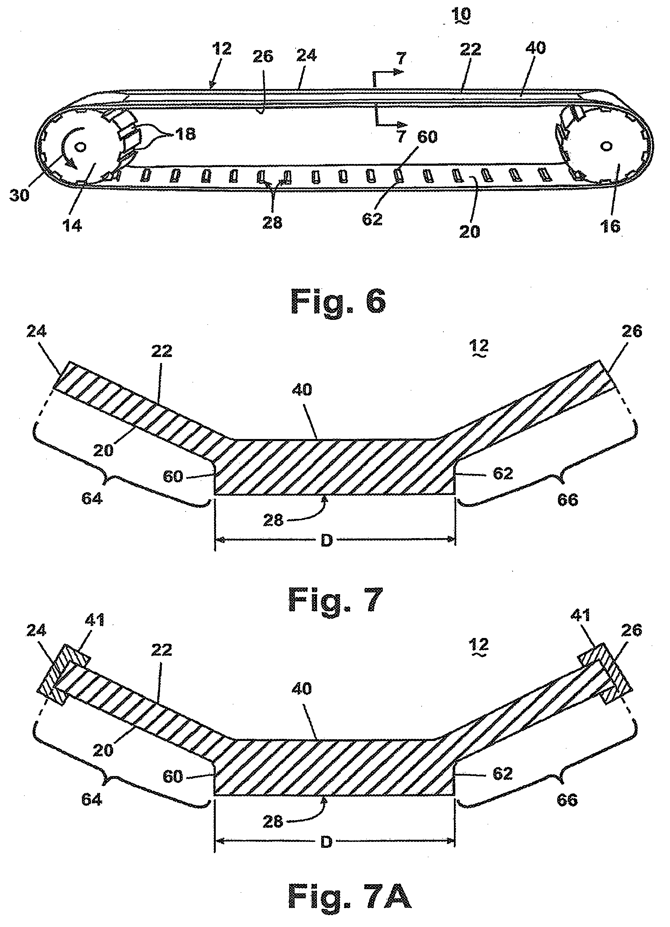

The means or structure for forming the trough 40 in the first and second embodiments of the conveyor 10 comprise a discontinuity in the form of the gap 42 or the slit 50 in each of the teeth 28. Figs. 6 and 7 illustrate a third embodiment of the conveyor 10, where the teeth 28 are shortened to enable formation of a trough. In the figures, the components and features similar to those of the previous embodiments are identified with the same reference numeral.

As best viewed in Fig. 7, the teeth 28 of the belt 12 are shortened in that the teeth 28 do not extend between the side edges 24, 26 of the belt 12. Rather, each of the teeth 28 extends between first and second tooth side edges 60, 62 that are spaced from the side edges 24, 26 of the belt 12. The first tooth side edge 60 is spaced from the side edge 24 of the belt 12 to form a first gap 64, and the second tooth side edge 62 is spaced from the other side edge 26 of the belt 12 to form a second gap 66. According to the illustrated embodiment, each of the teeth 28 are located at the same distance between the edges 24, 26 of the belt 12; therefore, the teeth 28 are longitudinally aligned, the first gaps 64 are longitudinally aligned, and the second gaps 66 are longitudinally aligned. As a result of this configuration, the side edges 24, 26 of the belt 12 naturally deflect relative to the rest of the belt 12 to form the trough 40.

Geometrical characteristics of the tooth 28, such as a width D of the tooth 28, which defines the size of the gaps 64, 66, determine, at least in part, the depth of the trough 40. Additionally, in the illustrated embodiment, the teeth 28 are centrally located along the belt 12 to position a lowermost point of the trough 40 approximately halfway between the side edges 24, 26. When the teeth 28 are approximately centrally located, the first and second gaps 64, 66 are substantially equal in size. However, the teeth 28 can be located other than centrally between the side edges 24,26.

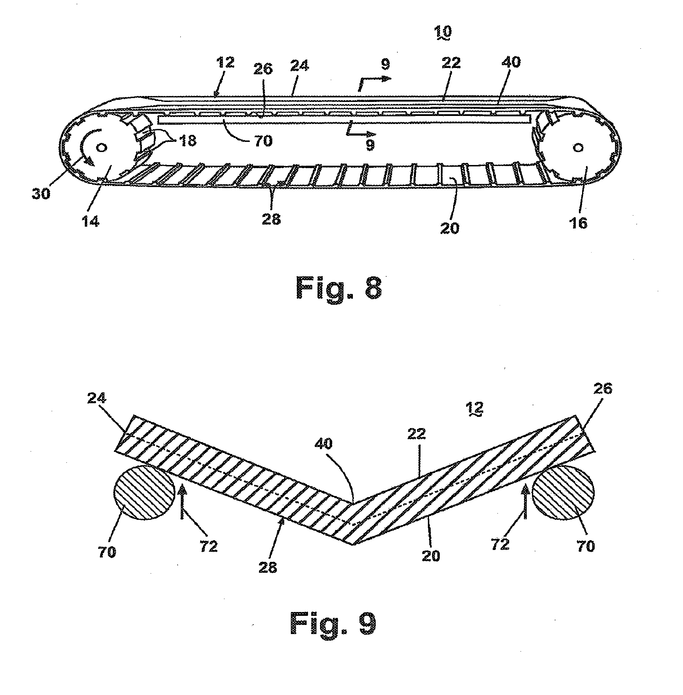

A fourth embodiment of the conveyor 10 is illustrated in Figs. 8 and 9, where components and features similar to those of the previous embodiments are identified with the same reference numeral. In the fourth embodiment conveyor 10, the teeth 28 are full-sized teeth that extend between the side edges 24, 26 of the belt 12 without any discontinuities, and the means for forming the trough 40 comprises a guide in the form of a pair of bars 70. The teeth 28 are flexible enough, either by the material from which they are formed or by their structure, to enable some bending about a longitudinal axis of the belt 12.

The bars 70, which are separate from the belt 12 but part of the conveyor 10, extend along an upper span of the belt 12 between the sprockets 14, 16 and are located beneath the side edges 24, 26. To form the trough 40, the bars 70 are positioned to apply an upward force, as indicated by arrows 72, to the side edges 24, 26 and thereby displace the side edges 24,26 relative to the center of the belt 12 (i.e., the portion of the belt 12 about midway between the side edges 24, 26). The size and positioning of the bars 70 is selected to achieve a desired depth of the trough 40. Additionally, each of the bars 70 can be formed by a plurality of spaced, shorter bars that together have a length approximately equal to that of a single bar 70.

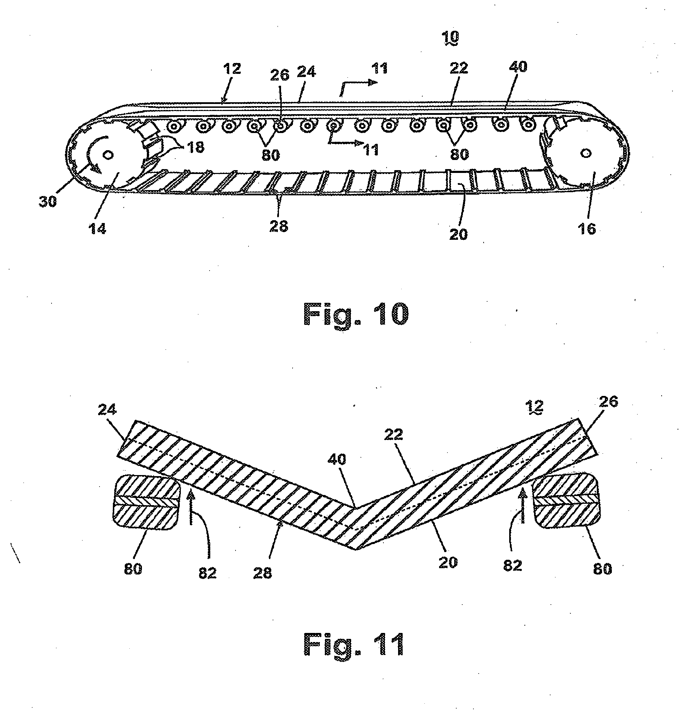

Figs. 10 and 11 illustrate a fifth embodiment of the conveyor 10, which is similar to the fourth embodiment, except that the guide is in the form of a plurality of rollers 80 rather than the bars 70. In the figures, the components and features similar to those of the previous embodiment are identified with the same reference numeral. With respect to forming the trough 40, the rollers 80 function the same as the bars 70; the rollers 80 apply an upward force, as indicated by an arrow 82, to the side edges 24, 26 of the belt 12 and thereby displace the side edges 24, 26 relative to the center of the belt 12. The rollers 80 provide the additional advantage of rotating as the belt 12 advances and, thus, providing little resistance to movement of the belt 12.

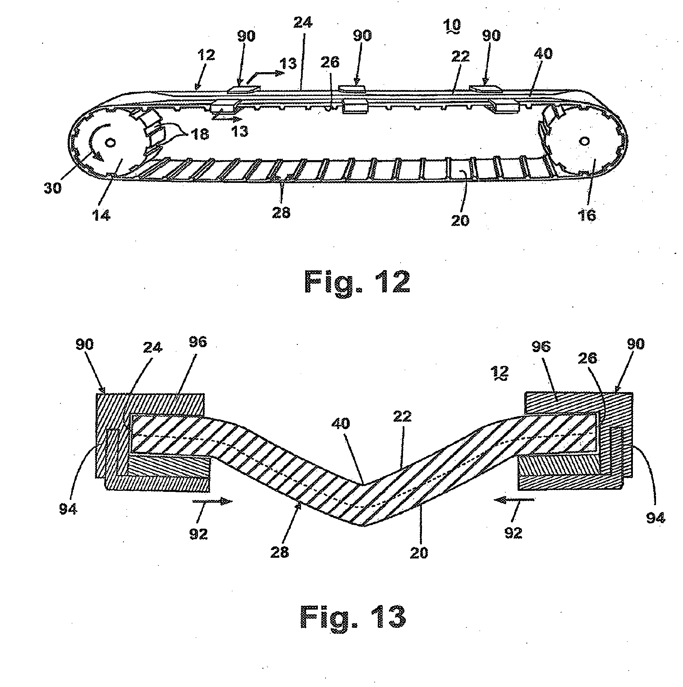

A sixth embodiment of the conveyor 10 is illustrated in Figs. 12 and 13, where components and features similar to those of the previous embodiments are identified with the same reference numerals. The sixth embodiment conveyor 10 is substantially identical to the previous embodiments that comprise a guide, except that the guide is in the form of shoes 90.

The shoes 90, which are separate from the belt 12 but part of the conveyor 10, are arranged in pairs along the upper span of the belt 12 between the sprockets 14, 16 and apply an inward force, as indicated by an arrow 92, to the side edges 24, 26. The inward force causes the side edges 24, 26 to deflect relative to the center of the belt 12 to form the trough 40. Each shoe 90 comprises a body 94 sized to receive one of the side edges 24, 26 of the belt 90. The body 94 includes a stop 96 to limit upward movement of the side edge 24, 26 received by the body 94.

The guides in the embodiments of Figs. 8-13 all apply a force to the belt 12 to cause the belt 12 to form the trough 40. Each of these embodiments are shown as comprising the belt 12 having the teeth 28 that extend between the side edges 24, 26 without any discontinuities; however, the guides can be utilized with belts that include other means for forming the trough 40. For example, any type of guide can be used with any of the belts 12 in the embodiments of Figs. 2-7 or belts that comprise other structures or features for forming the trough 40. When the conveyor 10 includes the guide and modified belt teeth, the two means cooperate to together form the trough 40.

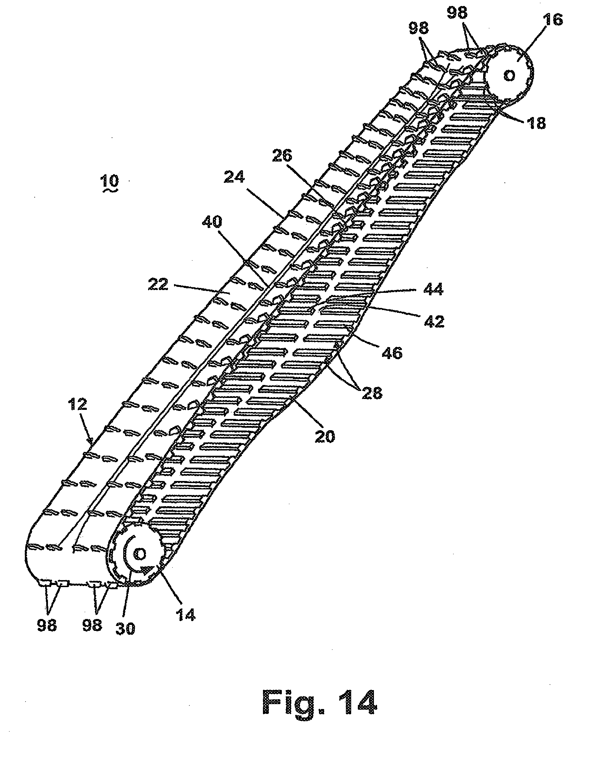

The belts 12 described above and shown in the figures can further comprise additional features commonly associated with low friction, positive drive belts. Such features can include, but are not limited to, cleats, printing on the outer surface 22 to facilitate sorting and counting, perforations, and a profiled outer surface 22 for special product handling. An example of an embodiment of conveyor 10 comprising the gap 42 shown in Figs. 2 and 3 and cleats 98 is illustrated in Fig. 14, where components and features similar to those of the previous embodiments are identified with the same reference numeral.

While the invention has been specifically described in connection with certain specific embodiments thereof, it is to be understood that this is by way of illustration and not of limitation, and the scope of the appended claims should be construed as broadly as the prior art will permit.

## Claims

1. A conveyor (10) comprising a toothed belt (12) of a thermoplastic material having a substantially flat surface (22) on one side of the belt and a plurality of teeth (28) on the other side of the belt, a drive sprocket (14) having transverse grooves (18), and an idler (16), wherein the teeth of the belt engage the grooves of the drive sprocket and an upper span of the belt extends between the drive sprocket (14) and the idler (16) so that the belt can be driven with little or no tension and with minimal friction around the drive sprocket (14) and the idler (16); **characterized by**
each tooth (28) having at least one slit (50) at the same distance between the edges of the belt as the adjacent teeth so that the slits are longitudinally aligned whereby a force acting on the belt will cause the flat surface (22) to be formed into a longitudinal trough (40) at the upper span.

2. The conveyor according to claim 1, wherein each tooth comprises only one slit (50).

3. The conveyor according to claims 1 or 2, wherein the slit (50) extends through the whole tooth.

4. The conveyor according to claim 1, **characterized by** two slits (50) in each tooth (28), spaced from each other, and aligned longitudinally, whereby the trough (40) will have a flat bottom (43).

5. The conveyor according to claim 1, further **characterized by** edge guides (70, 80, 90) that contact the belt to urge the edges to exert the force acting on the belt.

6. The conveyor according to any of claims 1-5, wherein the belt further comprises cleats (98) on the flat surface.

7. The conveyor according to claim 5 wherein the edge guides (70, 80, 90) are disposed at the edges of the belt to urge the edges to displace relative to the center of the belt to form the longitudinal trough (40), comprise a pair of bars (70) that are mounted beneath the edges (24, 26) and exert an upward force on the edges, comprise rollers (80) that are mounted beneath the edges (24, 26) and exert an upward force on the edges, or comprise shoes (90) arranged in pairs to receive the edges (24, 26) of the belt, wherein the pairs of shoes exert an inward force on the edges.

## Patentansprüche

1. Förderer (10) umfassend ein mit Zähnen versehenes Band (12) aus einem Thermoplastmaterial mit einer im Wesentlichen flachen Oberfläche (22) auf einer Seite des Bandes und einer Vielzahl von Zähnen (28) auf der anderen Seite des Bandes, ein Antriebszahnrad (14) mit querverlaufenden Nuten (18) und ein Leerlaufrad (16), wobei die Zähne des Bandes mit den Nuten des Antriebszahnrads in Eingriff kommen und sich ein oberer Bereich des Bandes zwischen dem Antriebszahnrad (14) und dem Leerlaufrad (16) so erstreckt, dass das Band mit geringer Spannung oder spannungsfrei sowie mit minimaler Reibung um das Antriebszahnrad (14) und das Leerlaufrad (16) angetrieben werden kann, **gekennzeichnet dadurch, dass**
jeder Zahn (28) derart mit wenigstens einem Schlitz (50) versehen ist, der mit dem gleichen Abstand zwischen den Kanten des Bandes angeordnet ist wie dies bei den benachbarten Zähnen der Fall ist, dass die Schlitze in Längsrichtung zueinander ausgerichtet sind, wodurch eine auf das Band einwirkende Kraft bewirkt, dass die flache Oberfläche (22) am oberen Bereich zu einer länglichen Rinne (40) geformt wird.

2. Förderer nach Anspruch 1, wobei jeder Zahn nur einen Schlitz (50) umfasst.

3. Förderer nach Anspruch 1 oder 2, wobei sich der Schlitz (50) durch den gesamten Zahn erstreckt.

4. Förderer nach Anspruch 1, **gekennzeichnet durch** zwei Schlitze (50) in jedem Zahn (28), welche zueinander beabstandet sind und in Längsrichtung verlaufen, wodurch die Rinne (40) einen flachen Boden (43) aufweist.

5. Förderer nach Anspruch 1, zusätzlich **gekennzeichnet durch** Kantenführungen (70, 80, 90), die mit dem Band so in Kontakt stehen, dass sie zur Ausübung der auf das Band einwirkenden Kraft gegen die Kanten drücken.

6. Förderer nach einem der Ansprüche 1 bis 5, wobei das Band zusätzlich an der flachen Oberfläche Stollen (98) aufweist.

7. Förderer nach Anspruch 5, wobei die Kantenführungen (70, 80, 90) an den Kanten des Bandes angeordnet sind, um so auf die Kanten einzuwirken, dass diese sich relativ zur Mitte des Bandes verschieben und so die längliche Rinne (40) formen, und wobei die Kantenführungen ein Paar von Stäben (70), die unterhalb der Kanten (24, 26) gehaltert sind und eine nach oben wirkende Kraft auf die Kanten ausüben, Rollen (80), die unterhalb der Kanten (24, 26) gehaltert sind und eine nach oben wirkende Kraft auf die Kanten ausüben, oder Backen (90) umfassen, welche paarweise so angeordnet sind, dass sie die Kanten (24, 26) des Bandes aufnehmen, wobei die Backenpaare eine nach innen wirkende Kraft auf die Kanten ausüben.

## Revendications

1. Convoyeur (10) comprenant une courroie crantée (12) en un matériau thermoplastique ayant une surface sensiblement plate (22) sur un côté de la courroie, et une pluralité de dents (28) sur l'autre côté de la courroie, un pignon d'entraînement (14) ayant des rainures transversales (18) et un pignon fou (16), dans lequel les dents de la courroie s'engagent dans les rainures du pignon d'entraînement et une portée supérieure de la courroie s'étend entre le pignon d'entraînement (14) et la pignon fou (16), de sorte que la courroie peut être entraînée avec peu ou pas de tension, et avec un frottement minimum autour du pignon d'entraînement (14) et du pignon fou (16) ; **caractérisé par le fait que**
chaque dent (28) possède au moins une fente (50) à la même distance entre les bords de la courroie que les dents adjacentes, de sorte que les fentes sont alignées longitudinalement, de manière à ce qu'une force agissant sur la courroie entraîne la formation d'une gouttière longitudinale (40) sur la surface plate (22), au droit de la portée supérieure.

2. Convoyeur selon la revendication 1, dans lequel chaque dent comprend une seule fente (50).

3. Convoyeur selon la revendication 1 ou la revendication 2, dans lequel la fente (50) s'étend sur l'ensemble de la dent.

4. Convoyeur selon la revendication 1, **caractérisé par** deux fentes (50) dans chaque dent (28), espacée l'une de l'autre, et alignées longitudinalement, de manière que la gouttière (40) ait un fond plat (43).

5. Convoyeur selon la revendication 1, **caractérisé en outre par** des guides de bord (70, 80, 90) qui entrent en contact avec la courroie pour amener les bords à exercer la force agissant sur la courroie.

6. Convoyeur selon l'une quelconque des revendications 1 à 5, dans lequel la courroie comprend, en outre, des tasseaux (98) sur la surface plate.

7. Convoyeur selon la revendication 5, dans lequel les guides de bord (70, 80, 90) sont disposés aux bords de la courroie pour amener les bords à se déplacer par rapport au centre de la courroie, pour former la gouttière longitudinale (40), comprennent une paire de barres (70), montées en dessous des bords (24, 26), et exercent une force vers le haut sur les bords, comprennent des rouleaux (80), montés en dessous des bords (24, 26), et exercent une force vers le haut sur les bords ou comprennent des patins (90) disposés en paires pour recevoir les bords (24, 26) de la courroie, dans laquelle les paires de patins exercent une force vers l'intérieur sur les bords.
